# EUROPÄISCHE PATENTANMELDUNG

(11) **EP 2 720 177 A1**
(43) Veröffentlichungstag der Anmeldung: **16.04.2014**
(21) Anmeldenummer: 13005604.7
(22) Anmeldetag: 02.12.2013
(51) Int. Cl.: G06Q 10/08

(54) **Verfahren zur Transportnachverfolgung**

(71) Anmelder: Argiriadis, Ioannis, 71106 Magstadt (DE)
(72) Erfinder: Ioannis ARGIRIADIS, 71106 Magstadt (DE)
(74) Vertreter: Jakelski & Althoff

(57) **Zusammenfassung**

Die Erfindung betrifft ein Verfahren zur Transportnachverfolgung. Diese umfasst das Zuweisen eines Identifizierungscodes zu einem mobilen Kommunikationsgerät (13), welches eine Ortungsvorrichtung (131) aufweist, das Registrieren des Identifizierungscodes in einer Datenbank (15), das Erfassen eines mit dem Identifizierungscode verknüpften Transportauftrags in der Datenbank (15), das Übermitteln des Transportauftrags an das mobile Kommunikationsgerät, das Übermitteln eines Nachverfolgungscodes an einen Auftraggeber (16) des Transportauftrags, und das Bereitstellen einer Nachverfolgung der Ortungsvorrichtung (131) für einen vorgegebenen Zeitraum, die mittels des Nachverfolgungscodes freischaltbar ist. Weiterhin betrifft die Erfindung das mobile Kommunikationsgerät (13), welches eine Ortungsvorrichtung (131) aufweist, dem ein Identifizierungscode zugewiesen ist, und das eingerichtet ist, um den mit dem Identifizierungscode verknüpften Transportauftrag zu empfangen, wobei eine Nachverfolgung der Ortungsvorrichtung (131) für einen vorgegebenen Zeitraum ermöglicht wird, die mittels des Nachverfolgungscodes freischaltbar ist.

## Beschreibung

Die vorliegende Erfindung betrifft ein Verfahren zur Transportnachverfolgung. Weiterhin betrifft die vorliegende Erfindung ein Computerprogramm, das alle Schritte des erfindungsgemäßen Verfahrens ausführt, wenn es auf einem Rechengerät oder Steuergerät abläuft, sowie einen Datenträger, der dieses Computerprogramm speichert. Schließlich betrifft die Erfindung ein mobiles Kommunikationsgerät, insbesondere ein Smartphone oder einen Tablet-PC, welches eingerichtet ist, um in dem erfindungsgemäßen Verfahren verwendet zu werden.

### Stand der Technik

Um Dienstleistungen von Speditions-, Kurier-, Express- und Paketdiensten stabil und transparent zu gestalten, kommt dem Tracking und Tracing in Echtzeit eine besondere und zukünftig steigende Bedeutung zu. Ein lückenloses Tracking und Tracing hat sich von einer optionalen Zusatzleistung zu einem Standardangebot dieser Dienstleister entwickelt. Dabei versteht man unter Tracking die Verfolgung eines logistischen Objekts entlang des Materialflusses zur Bestimmung des aktuellen Auftragsstatus und der aktuellen Position der Sendung. Tracing wiederum stellt die Rückverfolgung der Sendung dar, also einen Zugriff auf Trackingdaten, um den Weg einer Sendung nachzuvollziehen oder zurückzuverfolgen bzw. um kritische Ereignisse der Transportkette zu identifizieren. Die Dienstleister bieten ihren Kunden derzeit im Internet die Möglichkeit, sich jederzeit aktuell über den Auftragsstatus ihrer Sendungen zu informieren. Vor allem für Kunden von Diensten, die besonders zeitkritische und oft hochpreisige oder sehr wichtige Sendungen befördern, ist eine Sendungsverfolgung von besonderer Bedeutung, um die rechtzeitige Zustellung nachzuvollziehen.

Realisiert wird die Sendungsverfolgung heutzutage mit Hilfe der Barcode-Technologie. Jedes Sendungslabel ist mit einem Barcode versehen, der eine eindeutige Zuordnung der Sendung ermöglicht. Neben dem Barcode entwickelt sich RFID zu einer Konkurrenz im Hinblick auf die Identifizierung und Verfolgung von Sendungen. Darunter versteht man einen berührungslosen umfassenden Datenaustausch auf der Basis der Funkwellentechnologie. Sowohl das Barcoding als auch RFID können den diskreten Sendungsverfahren zugeordnet werden, da die Lesbarkeit der Daten nur dann funktionieren kann, wenn sich Barcode und RFID-Tag in unmittelbarer Nähe zu Barcode-Scannern oder RFID-Readern befinden.

Anders als bei den diskreten Verfahren zur Sendungsverfolgung kann bei stetigen Verfolgungsmethoden auch der Weg zwischen zwei Handhabungspunkten nachvollzogen werden. Weit verbreitet ist der Einsatz von GPS. Die Möglichkeit einer Ortung auf der Basis von Satellitennavigation hat sich etabliert und gewinnt weiter an Bedeutung. Vor allem durch die Entwicklung des europäischen Satellitensystems Galileo kann dieser Technologie eine erfolgreiche Zukunft vorausgesagt werden. Die diskrete Verfolgung hat sich bisher jedoch lediglich auf Fahrzeugebene durchgesetzt. So werden beispielsweise Lastkraftwagen eines Unternehmens mit Telematiksystemen ausgestattet, um jederzeit ihre Position bestimmen zu können. Zusätzlich können dadurch Zusatzdaten über Fahrzeugzustand und Fahrverhalten übermittelt werden. Eine diskrete Sendungsverfolgung seitens des Auftraggebers der Sendung ist hierdurch jedoch nicht möglich.

Es ist daher die Aufgabe der vorliegenden Erfindung, ein Verfahren zur Transportnachverfolgung bereitzustellen, welches dem Auftraggeber eines Transports für die gesamte Transportdauer eine diskrete Transportnachverfolgung ermöglicht. Dieses Verfahren soll unabhängig von der fest installierten Nachverfolgungsarchitektur einzelner Speditions- oder Logistikunternehmen die Möglichkeit schaffen, dass der Auftraggeber jeden beliebigen Transport nachverfolgen kann.

### Offenbarung der Erfindung

Das erfindungsgemäße Verfahren zur Transportnachverfolgung umfasst das Zuweisen eines Identifizierungscodes zu einem mobilen Kommunikationsgerät, welches eine Ortungsvorrichtung aufweist, das Registrieren des Identifizierungscodes in einer Datenbank, das Erfassen eines mit dem Identifizierungscode verknüpften Transportauftrags in der Datenbank, das Übermitteln des Transportauftrags an das mobile Kommunikationsgerät, das Übermitteln eines Nachverfolgungscodes an den Auftraggeber des Transportauftrags und das Bereitstellen einer Nachverfolgung der Ortungsvorrichtung für einen vorgegebenen Zeitraum, die mittels des Nachverfolgungscodes freischaltbar ist.

Das mobile Kommunikationsgerät ist vorzugsweise ein Smartphone oder ein Tablet-PC. Das Zuweisen des Identifizierungscodes kann dann beispielsweise über eine App (Application) erfolgen. Wird das Kommunikationsgerät immer von einem bestimmten Fahrer eines Transportunternehmens mitgeführt, so wird kann sein Identifizierungscode in der Datenbank optional diesem Fahrer zugeordnet. Verbleibt das Kommunikationsgerät hingegen stets in ein und demselben Fahrzeug, so kann es in der Datenbank optional diesem Fahrzeug zugeordnet werden.

Wenn der Auftraggeber des Transportauftrags diesen mittels des erfindungsgemäßen Verfahrens nachverfolgen will, so ist es vorgesehen, dass er sich zunächst den Identifizierungscode des von ihm gewünschten Fahrers bzw. des von ihm gewünschten Fahrzeugs mitteilen lässt. Anschließend kann er ein mit dem Identifizierungscode verknüpften Transportauftrag erteilten. Der Transportauftrag umfasst insbesondere den Beginn und die Dauer des vorgegebenen Zeitraums. Damit der Transportauftrag in der Datenbank erfasst werden kann, kann er auf elektronischem Wege an diese übermittelt werden, beispielsweise ebenfalls über eine App oder über eine herkömmliche Internetanwendung. Durch das Übermitteln des Transportauftrags an das mobile Kommunikationsgerät wird der Fahrer über den Transportauftrag und dessen Nachverfolgung informiert. Es ist bevorzugt, dass das Übermitteln des Nachverfolgungscodes an den Auftraggeber erst erfolgt, nachdem die Datenbank eine Auftragsbestätigung von dem mobilen Kommunikationsgerät empfangen hat. Dadurch wird sichergestellt, dass eine Nachverfolgung nur dann erfolgen kann, wenn der Fahrer den Transportauftrag aktiv angenommen hat.

Sobald dem Auftraggeber der Nachverfolgungscode übermittelt wurde, kann er mittels einer hierfür eingerichteten Software, beispielsweise einer App oder Internetanwendung, eine stetige Nachverfolgung der Ortungsvorrichtung im mobilen Kommunikationsgerät vornehmen und ist so immer über die Position des Fahrers bzw. des Fahrzeugs und damit seiner Sendung informiert. Die Ortungsvorrichtung ist hierzu vorzugsweise ein GPS-Empfänger. Alternativ kann als Ortungsvorrichtung allerdings auch ein GSM-Modul verwendet werden. Dieses ermöglicht eine stetige Nachverfolgung der Ortungsvorrichtung aufgrund der Identifikation von Funkzellen des Mobilfunks des mobilen Kommunikationsgeräts. Diese Nachverfolgung ist allerdings ungenauer als eine Nachverfolgung, die auf GPS basiert. Um den Datenschutz zu gewährleisten, ermöglicht der Nachverfolgungscode die Nachverfolgung erst mit Beginn des vorgegebenen Zeitraums, welcher mit dem Beginn des beauftragten Transports zusammenfällt. Die Dauer des Zeitraums kann vom Auftraggeber so vorgegeben werden, dass sie der erwarteten Transportdauer entspricht. Für den Fall, dass sich der Transport verzögert, ist es bevorzugt, dass die Datenbank vor dem Ende des vorgegebenen Zeitraums eine Mitteilung an den Auftraggeber sendet. Es ist besonders bevorzugt, dass in der Datenbank ein Zeitabstand zum Ende des vorgegebenen Zeitraums hinterlegt ist, der vorgibt, wann die Mitteilung abgesendet werden soll. Dieser Zeitabstand kann entweder vom Datenbankbetreiber vorgegeben werden, oder er kann vom Auftraggeber als Teil des Transportauftrags an die Datenbank übermittelt werden. Um einen vorzeitigen Abbruch der Transportnachverfolgung zu vermeiden, ist es weiterhin besonders bevorzugt, dass dem Auftraggeber ermöglicht wird, den vorgegebenen Zeitraum zu verlängern. Dies kann über die oben erwähnte App oder Internetanwendung erfolgen.

Für den Fall, dass der Transport vor Verstreichen des vorgegebenen Zeitraums beendet wird, ist es bevorzugt, dass die Nachverfolgung der Ortungsvorrichtung vor Ablauf des vorgegebenen Zeitraums beendet wird, wenn ein Abbruchsignal von dem mobilen Kommunikationsgerät an die Datenbank übermittelt wird. Dieses Abbruchsignal kann vom Fahrer bei Beendigung des Transports versandt werden. Es kann insbesondere mit einer Quittierung des Sendungsempfangs durch einen Empfänger verknüpft werden, welche zusammen mit dem Abbruchsignal an die Datenbank übermittelt und von dieser an den Auftraggeber weitergeleitet wird.

Vorzugsweise wird nach Erfassen eines mit dem Identifizierungscode verknüpften Transportauftrags in der Datenbank eine Rechnung erstellt und an den Auftraggeber übermittelt. Besonders bevorzugt wird die Rechnung in Abhängigkeit von der Länge des vorgegebenen Zeitraums erstellt. Hierdurch ermöglicht das erfindungsgemäße Verfahren eine automatisierte Abrechnung der vom Datenbankbetreiber gegenüber dem Auftraggeber erbrachten Dienstleistung zur Transportnachverfolgung. Die Rechnung kann insbesondere auf einfache Weise elektronisch an den Auftraggeber übermittelt werden, wobei dieselben Kommunikationsmittel benutzt werden können, welche auch zur Übermittlung des Transportauftrags an die Datenbank und der Übermittlung einer Mitteilung des bevorstehenden Ablaufs des vorgegebenen Zeitraumes bzw. einer Mitteilung der Empfangsquittierung an den Auftraggeber verwendet werden.

Das erfindungsgemäße Computerprogramm führt alle Schritte des erfindungsgemäßen Verfahrens aus, wenn es auf einem Rechengerät insbesondere einem Rechengerät einer Datenbank abläuft. Der erfindungsgemäße Datenträger speichert das erfindungsgemäße Computerprogramm. Indem dieses vom Datenträger auf ein mit einer Datenbank verknüpftes Rechengerät aufgespielt wird, kann das Rechengerät zur Durchführung des erfindungsgemäßen Verfahrens eingerichtet werden.

Dem erfindungsgemäßen mobile Kommunikationsgerät, welches eine Ortungsvorrichtung aufweist, ist ein Identifizierungscode zugewiesen, und es ist eingerichtet, um einen mit dem Identifizierungscode verknüpften Transportauftrag zu empfangen, wobei eine Nachverfolgung der Ortungsvorrichtung für einen vorgegebenen Zeitraum ermöglicht wird, die mittels des Nachverfolgungscodes freischaltbar ist. Es handelt sich dabei bevorzugt um ein Smartphone oder einen Tablet-PC mit einem GPS-Empfänger. Ein herkömmliches mobiles Kommunikationsgerät kann durch Aufspielen einer entsprechenden Software, beispielsweise in Form einer App, als erfindungsgemäßes mobiles Kommunikationsgerät eingerichtet werden.

Das mobile Kommunikationsgerät ist vorzugsweise eingerichtet, um eine Auftragsbestätigung des Transportauftrags zu versenden. Dieser Versand kann ebenfalls durch eine App erfolgen. Weiterhin ist bevorzugt, dass das mobile Kommunikationsgerät, beispielsweise durch eine App, eingerichtet ist, um ein Abbruchsignal zum Abbruch der Nachverfolgung zu versenden. Besonders bevorzugt können zusammen mit dem Abbruchsignal weitere Informationen, wie beispielsweise die Quittierung eines Sendungsempfangs versendet werden.

### Kurze Beschreibung der Zeichnungen

Ein Ausführungsbeispiel des erfindungsgemäßen Verfahrens wird in den folgenden Zeichnungen dargestellt und in der begleitenden Beschreibung näher erläutert.
Fig. 1 zeigt schematisch die Wechselwirkung unterschiedlicher Geräte in dem Ausführungsbeispiel der Erfindung.
Fig. 2 zeigt ein Ablaufdiagramm eines ersten Teils eines Verfahrens gemäß dem Ausführungsbeispiel der Erfindung.
Fig. 3 zeigt ein Ablaufdiagramm eines zweiten Teils eines Verfahrens gemäß dem Ausführungsbeispiel der Erfindung.

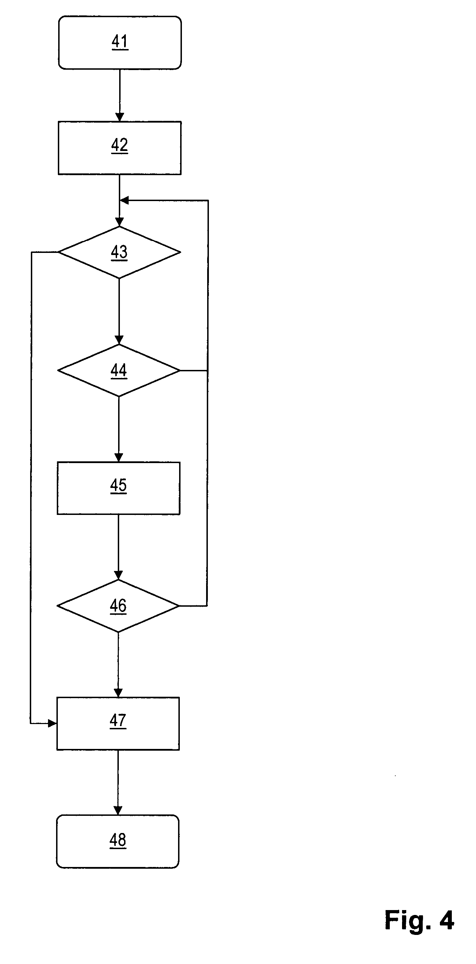

Fig. 4 zeigt ein Ablaufdiagramm eines dritten Teils eines Verfahrens gemäß dem Ausführungsbeispiel der Erfindung.

### Ausführungsbeispiele der Erfindung

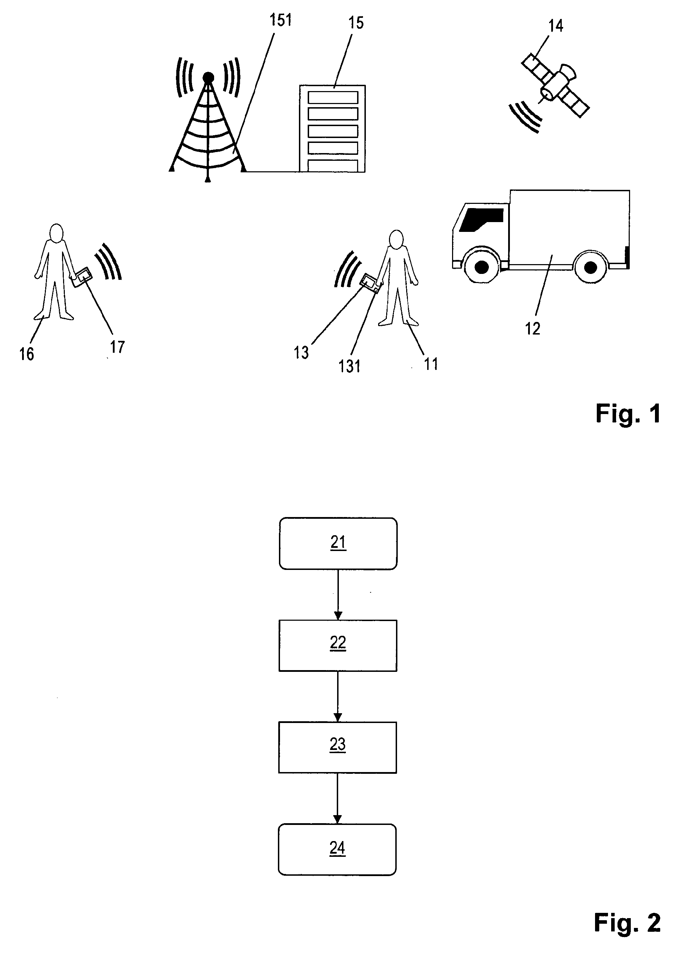

In einem Ausführungsbeispiel der Erfindung ist der Fahrer 11 eines Lastkraftwagens 12 mit einem Smartphone 13 ausgestattet. Wie in Fig. 1 gezeigt, verfügt das Smartphone 13 über einen GPS-Empfänger 131, welcher die Positionierungssignale von GPS-Satelliten 14 empfangen kann. Eine elektronische Datenbank 15 ist mit einem öffentlichen Mobilfunk-Kommunikationssystem 151 verbunden, welches eine drahtlose Kommunikation mit dem Smartphone 13 des Fahrers 11 ermöglicht. Ein Auftraggeber 16, der den Transport einer Ware mit dem Lastkraftwagen 12 nachverfolgen lassen möchte, verfügt über ein weiteres Smartphone 17.

Um die Nachverfolgung seiner Position mittels seines Smartphones 13 und damit von Waren in dem Lastkraftwagen 12 durch verschiedene Auftraggeber mittels des erfindungsgemäßen Verfahrens zu ermöglichen, lässt der Fahrer 11 sein Smartphone 13 zunächst in der Datenbank 15 registrieren. Der Ablauf dieser Registrierung ist schematisch in Fig. 2 dargestellt. Nach dem Beginn 21 des Registrierungsvorgangs, welcher beispielsweise durch das Herunterladen einer App auf das Smartphone 13 des Fahrers 11 eingeleitet werden kann, wird dem Smartphone 13 im ersten Verfahrensschritt 22 ein Identifizierungscode zugewiesen. In einem zweiten Verfahrensschritt 23 wird der Identifizierungscode in der Datenbank 15 registriert. Der Identifizierungscode wird hierbei dem Smartphone 13 des Fahrers 11 zugeordnet. Nachdem der Identifizierungscode in der Datenbank 15 abgelegt wurde, wird der Registrierungsvorgang abgeschlossen 24 und der Fahrer 11 kann das erfindungsgemäße Verfahren nutzen.

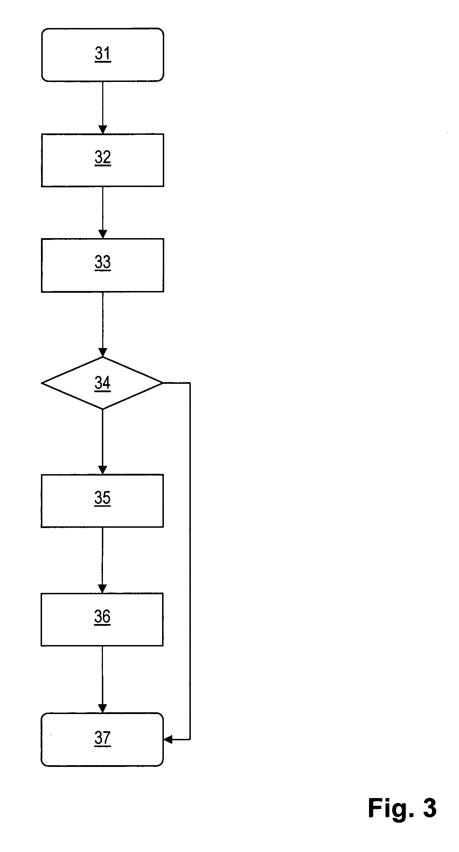

Wenn der Auftraggeber 16 mit dem Fahrer 11 einen Transportvertrag abgeschlossen hat und den Transport mittels des erfindungsgemäßen Verfahrens nachverfolgen möchte, muss der Fahrer 11 ihm zunächst seinen Identifizierungscode mitteilen. Dies kann durch mündliche Kommunikation mittels der Smartphones 13, 17 erfolgen. Anschließend kann der Auftraggeber 16 bei der Datenbank 15 einen Nachverfolgungscode anfordern. Dies ist schematisch in Fig. 3 dargestellt. Nach dem Start 31 der Anforderung, welcher durch Absenden eines Transportauftrags erfolgt, der mittels einer App auf dem Smartphone 17 des Auftraggebers 16 erstellt werden kann, wird dieser in einem ersten Verfahrensschritt 32 in der Datenbank 15 erfasst. Der Auftraggeber 16 gibt Beginn und Dauer des beim Fahrer 11 beauftragten Transports in den Transportauftrag ein und verknüpft diesen mit dem Identifizierungscode des Smartphones 13 des Fahrers 11. Nach dem Erfassen 32 des Transportauftrags übermittelt die Datenbank 15 diesen in einem zweiten Verfahrensschritt 35 an das Smartphone 13 des Fahrers 11. Dieser muss nun mittels des Smartphones 13 eine Auftragsbestätigung 34 an die Datenbank 15 zurücksenden, mit der er bestätigt, dass Beginn und Dauer der vom Auftraggeber 16 angeforderten Transportnachverfolgung mit dem zwischen dem Fahrer 11 und dem Auftraggeber 16 geschlossenen Transportvertrag übereinstimmen.

Nach Erhalt der Auftragsbestätigung 34 übermittelt die Datenbank 15 dem Smartphone 17 des Auftraggebers 16 einen Nachverfolgungscode, der dem Smartphone 13 des Fahrers 11 zugeordnet ist. In der Datenbank 15 wird automatisch eine Rechnung erstellt 36 und auf das Smartphone 17 des Auftraggebers 16 gesandt. Wenn der Fahrer 11 hingegen keine Auftragsbestätigung absendet, weil der vom Auftraggeber 16 angeforderte Nachverfolgungszeitraum nicht mit dem mit dem Fahrer 11 geschlossenen Vertrag übereinstimmt, wird kein Nachverfolgungscode übermittelt und es erfolgt eine Beendigung 37 des Verfahrens.

Sobald der Auftraggeber 16 über den Nachverfolgungscode verfügt, kann er jederzeit eine Nachverfolgung der Ortungsvorrichtung 131 im Smartphone 13 des Fahrers 11 vornehmen. Hierzu sendet das Smartphone 13 des Fahrers 11 Positionsdaten, die es aus der Wechselwirkung des GPS-Empfängers 131 und der GPS-Satelliten 14 erhält, kontinuierlich an die Datenbank 15. Die Datenbank 15 übermittelt diese Positionsdaten an das Smartphone 17 des Auftraggebers 16 weiter, wenn dieses mittels des Nachverfolgungscodes authentifiziert wurde. Der Auftraggeber 16 kann den Nachverfolgungscode auch auf ein anderes Gerät, wie beispielsweise einen Desktop-PC, einen Laptop-PC oder einen Tablet-PC übertragen, um von diesem Gerät mittels einer anderen App oder einer Internetanwendung die Nachverfolgung vorzunehmen. Sobald der Nachverfolgungscode bereitgestellt wurde, erfolgt der Start 41 eines Verfahrensablaufs in der Datenbank 15, um eine stetige Nachverfolgungsmöglichkeit zu gewährleisten. Hierzu wird zunächst in einem ersten Verfahrensschritt 42 die Nachverfolgung in der oben beschriebenen Weise bereitgestellt. Während der Nachverfolgung erfolgt eine Überprüfung 43, ob der Fahrer 11 bereits ein Abbruchsignal an die Datenbank 15 gesendet hat, mit dem er diese über den Abschluss des Transportes informiert und somit eine Beendigung der Nachverfolgung anfordert. Ist dies noch nicht erfolgt, so wird weiterhin überprüft, ob der Ablauf des vom Auftraggeber 16 vorgegebenen Zeitraums der Nachverfolgung bevorsteht. Ist dies der Fall, so sendet die Datenbank 15 eine Mitteilung 45 an das Smartphone 17 des Auftraggebers 16, um diesen auf das bevorstehende Ende der Nachverfolgung hinzuweisen. Er hat dann die Möglichkeit, eine Verlängerung 46 dieses Zeitraums anzufordern. Sobald entweder der vorgegebene Zeitraum ohne Verlängerung abgelaufen ist oder die Datenbank 15 ein Abbruchsignal 43 vom Smartphone 13 des Fahrers 11 empfangen hat, erfolgt ein Abbruch 47 der Nachverfolgung. Dies bedeutet, dass Positionsdaten des Smartphones 13 des Fahrers 11 nicht mehr an den Auftraggeber 16 weitergeleitet werden. Damit ist das Ende 48 des Verfahrens gemäß dem Ausführungsbeispiel der Erfindung erreicht.

Das Ausführungsbeispiel des erfindungsgemäßen Verfahrens versetzt den Fahrer 11 in die Lage, jedem seiner Auftraggeber eine Nachverfolgung von mittels seines Lastkraftwagens 12 durchgeführten Warentransporten zu ermöglichen. Hierzu benötigt er keine fest im Lastkraftwagen 12 eingebauten Telemetrievorrichtungen. Er kann die Nachverfolgung zudem jedem beliebigen Auftraggeber zur Verfügung stellen und nicht nur Auftraggebern, die ein fest mit seinem Lastkraftwagen 12 verknüpftes Ortungssystem nutzen.

## Patentansprüche

1. Verfahren zur Transportnachverfolgung, umfassend
- Zuweisen (22) eines Identifizierungscodes zu einem mobilen Kommunikationsgerät (13), welches eine Ortungsvorrichtung (131) aufweist,
- Registrieren (23) des Identifizierungscodes in einer Datenbank (15),
- Erfassen (32) eines mit dem Identifizierungscode verknüpften Transportauftrags in der Datenbank (15),
- Übermitteln (33) des Transportauftrags an das mobile Kommunikationsgerät (13),
- Übermitteln (35) eines Nachverfolgungscodes an einen Auftraggeber (16) des Transportauftrags, und
- Bereitstellen (42) einer Nachverfolgung der Ortungsvorrichtung (131) für einen vorgegebenen Zeitraum, die mittels des Nachverfolgungscodes freischaltbar ist.

2. Verfahren nach Anspruch 1, **dadurch gekennzeichnet, dass** das mobile Kommunikationsgerät (13) ein Smartphone oder ein Tablet-PC ist, und dass die Ortungsvorrichtung (131) ein GPS-Empfänger ist.

3. Verfahren nach Anspruch 1 oder 2, **dadurch gekennzeichnet, dass** der Transportauftrag den Beginn und die Dauer des vorgegebenen Zeitraums umfasst.

4. Verfahren nach einem der Ansprüche 1 bis 3, **dadurch gekennzeichnet, dass** das Übermitteln (35) des Nachverfolgungscodes an den Auftraggeber erst erfolgt, nachdem die Datenbank (15) eine Auftragsbestätigung (34) von dem mobilen Kommunikationsgerät (13) empfangen hat.

5. Verfahren nach einem der Ansprüche 1 bis 4, **dadurch gekennzeichnet, dass** die Datenbank (15) vor dem Ende des vorgegebenen Zeitraums eine Mitteilung (45) an den Auftraggeber (16) sendet.

6. Verfahren nach Anspruch 5, **dadurch gekennzeichnet, dass** es dem Auftraggeber ermöglicht wird, den vorgegebenen Zeitraum zu verlängern (46).

7. Verfahren nach einem der Ansprüche 1 bis 6, **dadurch gekennzeichnet, dass** die Nachverfolgung der Ortungsvorrichtung (131) vor Ablauf des vorgegebenen Zeitraums beendet wird, wenn ein Abbruchsignal (43) von dem mobilen Kommunikationsgerät (13) an die Datenbank (15) übermittelt wird.

8. Verfahren nach einem der Ansprüche 1 bis 7, **dadurch gekennzeichnet, dass** nach Erfassen (32) des mit dem Identifizierungscode verknüpften Transportauftrags in der Datenbank (15) eine Rechnung erstellt wird (36) und an den Auftraggeber übermittelt wird.

9. Verfahren nach Anspruch 8, **dadurch gekennzeichnet, dass** die Rechnung in Abhängigkeit von der Länge des vorgegebenen Zeitraums erstellt wird.

10. Computerprogramm, das alle Schritte eines Verfahrens nach einem der Ansprüche 1 bis 9 ausführt, wenn es auf einem Rechengerät, insbesondere einem Rechengerät einer Datenbank (15), abläuft.

11. Datenträger, **dadurch gekennzeichnet, dass** er ein Computerprogramm nach Anspruch 11 speichert.

12. Mobiles Kommunikationsgerät (13), welches eine Ortungsvorrichtung (131) aufweist, **dadurch gekennzeichnet, dass** ihm ein Identifizierungscode zugewiesen ist, und dass es eingerichtet ist, um einen mit dem Identifizierungscode verknüpften Transportauftrag zu empfangen, wobei eine Nachverfolgung der Ortungsvorrichtung (131) für einen vorgegebenen Zeitraum ermöglicht wird, die mittels des Nachverfolgungscodes freischaltbar ist.

13. Mobiles Kommunikationsgerät (13) nach Anspruch 12, **dadurch gekennzeichnet, dass** das mobile Kommunikationsgerät (13) ein Smartphone oder ein Tablet-PC ist, und dass die Ortungsvorrichtung (131) ein GPS-Empfänger ist.

14. Mobiles Kommunikationsgerät (13) nach Anspruch 12 oder 13, **dadurch gekennzeichnet, dass** es eingerichtet ist, um eine Auftragsbestätigung (34) des Transportauftrags zu versenden.

15. Mobiles Kommunikationsgerät nach einem der Ansprüche 12 bis 14, **dadurch gekennzeichnet, dass** es eingerichtet ist, um ein Abbruchsignal (43) zum Abbruch der Nachverfolgung zu versenden.
